# EUROPÄISCHE PATENTSCHRIFT

(11) **EP 2 958 731 B1**
(45) Veröffentlichungstag und Bekanntmachung des Hinweises auf die Patenterteilung: **10.03.2021**
(21) Anmeldenummer: 14704095.0
(22) Anmeldetag: 28.01.2014
(51) Int. Cl.: B29C 48/08, B29C 48/02

(54) **VORRICHTUNG UND VERFAHREN ZUR HERSTELLUNG VON KUNSTSTOFFROHREN**
DEVICE AND METHOD FOR PRODUCING PLASTIC TUBES
DISPOSITIF ET PROCÉDÉ DE FABRICATION DE TUBES EN MATIÈRE PLASTIQUE

(30) Priorität: 21.02.2013 DE 102013202798
(43) Veröffentlichungstag der Anmeldung: 30.12.2015
(73) Patentinhaber: battenfeld-cincinnati Germany GmbH, 32547 Bad Oeynhausen (DE)
(72) Erfinder: STIEGLITZ, Henning, 32425 Minden (DE); DOHMANN, Heinrich, 37671 Höxter (DE)
(86) Internationale Anmeldenummer: PCT/EP2014/051600
(87) Internationale Veröffentlichungsnummer: WO 2014/127958

(56) Entgegenhaltungen:
- EP-A1- 1 334 815
- EP-A2- 0 838 322
- WO-A1-00/16960
- WO-A1-2012/014389
- DE-A1- 19 843 341
- JP-A- H0 847 963
- JP-A- S62 149 412
- JP-A- 2000 246 782
- JP-A- 2003 311 808
- US-A- 3 611 493

## Beschreibung

Die Erfindung betrifft eine Vorrichtung zur Herstellung von Kunststoffrohren im Extrusionsverfahren mit einem Extruder, einem sich in Produktionsrichtung an den Extruder anschließenden Rohrkopf bestehend aus einem Grundwerkstoff mit mindestens einem Dorn und einer Hülse, wobei sich zwischen dem Dorn und der Hülse ein Schmelzekanal bildet, der mindestens am Dornende des Domes und am Hülsenende der Hülse in Produktionsrichtung gesehen strömungsgünstig ausgebildet ist, wobei der Dorn und die Hülse relativ zueinander vor und zurück verstellbar sind, wobei die Außenfläche des Dornes und/oder die Innenfläche der Hülse mindestens partiell aus einem Werkstoff besteht/bestehen der eine höhere Gleitfähigkeit aufweist als der Grundwerkstoff, sowie ein Verfahren zur Durchführung.

Im Stand der Technik ist eine Vielzahl an Vorrichtungen zum Herstellen von Kunststoffrohren bekannt. Darunter sind auch Rohrköpfe mit Schmelzeleitungen die eine verbesserte Gleiteigenschaft aufweisen.

So offenbart zum Beispiel die DE 102 05 210 B4 einen Rohrkopf bestehend aus Dorn und Hülse bei dem sowohl der Dorn als auch die Hülse aus Segmenten aufgebaut ist. Diese Segmente sind aus unterschiedlichen Werkstoffen gefertigt, wodurch im Bereich des Schmelzekanals unterschiedliche Gleiteigenschaften vorherrschen.

Die EP 1 334 815 A1 schlägt eine Vorrichtung zur Herstellung von Kunststoffrohren im Extrusionsverfahren mit einem Extruder vor, bei der sich in Produktionsrichtung an den Extruder anschließenden, ein Dornhalter in einem Düsenmantel aufweisenden Rohrkopf befindet, wobei das Dornende des Dornhalters in Produktionsrichtung gesehen konisch ausgebildet ist und der das Dornende umgebende und einen Massespalt mit dem Dornende ausbildenden Düsenmantel ebenfalls konisch ausgebildet ist, und das Dornende in Produktionsrichtung innerhalb des Düsenmantels vor und zurück verstellbar ist, wobei die Außenfläche des Dornendes und die Innenfläche des Düsenmantels aus einem Werkstoff bestehen, der eine höhere Gleitfähigkeit aufweist als der Werkstoff, der die Außen- und Innenfläche des eigentlichen Schmelzekanales im Rohrkopf bildet.

DE 38 42 919 A zeigt einen weiteren Stand der Technik.

**Aufgabe** der vorliegenden Erfindung ist es, die bekannten Rohrköpfe weiterzubilden.

Die **Lösung** der Aufgabe ist in Verbindung mit dem Oberbegriff des Anspruches 1 dadurch gekennzeichnet, dass die Außenfläche des Dorns und/oder die Innenfläche der Hülse mit einer Beschichtung versehen ist deren Gleiteigenschaft in Produktionsrichtung stetig verbessert, oder die Außenfläche des Dorns und/oder die Innenfläche der Hülse mit einer Beschichtung versehen ist deren Gleiteigenschaft in Produktionsrichtung abwechselnd besser und wieder schlechter wird, sowie einem Verfahren nach Anspruch 15.

Die strömungsgünstige Ausbildung kann auf das jeweils zu verarbeitende Produkt (Schmelzetyp) bezogen werden, da es nicht bei allen Schmelzetypen gleich ist. Der Stahl kann auch partiell wärmebehandelt und/oder besser poliert werden, um die unterschiedlichen Gleiteigenschaften zu erreichen.

Durch diese erfindungsgemäßen Ausgestaltungen des Rohrkopfes wird es möglich die Gleiteigenschaften des Schmelzekanals individuell anzupassen und damit den unterschiedlichen Erfordernissen bei der Produktion von Kunststoffrohren gerecht zu werden.

Es wird damit erst möglich, den Schmelzekanal im Rohrkopf, zum Beispiel in Abhängigkeit des zu verarbeitenden Materials bzw. unterschiedliche Materialien bei Mehrschichtextrusion, mit einer darauf abgestimmten Gleiteigenschaft zu versehen, die bestmögliche Ergebnisse, bezogen auf:
1. Das Schmelzeströmungsprofil über die Fließspaltweite und somit auf ein minimales Verstrecken der Schmelze im Fließquerschnitt zu erzielen.
   Dieses kann bei Umlenkungen, Kompress- und Dekompressionen der Schmelze im Fließkanal Sinnvoll sein. Das Verweilzeitfenster der Schmelzepartikel kann so gezielt minimiert werden. Das ist insbesondere bei verweilzeitkritischen Materialien ober auch bei einem Farbwechsel der Schmelze im Fließkanal von Bedeutung. Auch in Bereichen wo unterschiedliche Schmelzeströme auf einander treffen, können durch gezielte Verbesserung der Fließeigenschaften an den Fließoberflächen der Schmelzezusammenfluss optimiert werden. Des Weiteren kann das Fließverhalten der bereits zusammen geführten Schmelzeströme in nachfolgenden kritischen Fließabschnitte durch eine entsprechende Verbesserung der Fließeigenschaften an den Fließoberflächen analog zu den verweilzeitkritischen Materialien verbessert werden und somit die Gefahr der Schmelzevermischung minimiert werden.
2. Die Oberflächenbeschaffenheit des zu produzierenden Rohres zu erreichen.
   Wenn die Haftung zwischen der Schmelze und der Fließoberfläche am Düsenaustritt minimal ist, werden auch die Schubspannungen im Schmelzestrom minimiert und somit auch das Aufreißen der Schmelze am Austritt des Schmelzekanales. Die nicht bzw. nur minimal beschädigte Schmelzestromoberfläche, kann somit die bestmögliche Rohroberflächenbeschaffenheit erzielen.

Die unter Bezug genommen Flächen können z.B. mit PTFE beschichtet werden oder Bereiche des Rohrkopfes direkt aus einem Material gefertigt sein dessen Gleiteigenschaft per se besser als das des Grundmaterials ist. Die Polierqualität d.h. die Rauhtiefe hat auch Einfluss auf des Fließverhalten der Schmelze Bedingt durch Wärmebehandlung des Grundmaterials kann die Gitterstruktur verändert werden und somit auch die Oberflächengüte verbessert werden. Mit Grundmaterial wird das bei der Herstellung von Rohrköpfen üblich verwendete Material Stahl wie z.B. CK 45 oder CeMo 4 verstanden.

Die Ausgestaltung des Rohrkopfes kann sehr individuell sein. Die Form der Hülse sowie des Dorns und deren Kombination zum Rohrkopf sind in den Unteransprüchen wiedergegeben. So ist beispielsweise vorgesehen den Durchmesser des Dorns zum Dornende konisch zu vergrößern, konisch zu verkleinern, mit einem große oder kleinen Bogen/Rundung oder Radius zu versehen oder stetig auslaufen zu lassen.

Analoge Ausgestaltungen sind bei der Hülse vorgesehen, auch hier kann der Innendurchmesser am Ende der Hülse sich konisch vergrößern oder verkleinern, mit einem große oder kleinen Bogen/Rundung oder Radius versehen sein oder stetig auslaufen.

Die geometrische Gestaltung des Fließkanals unterliegt den jeweiligen Anforderungen an die Schmelzeführung im Werkzeug und an den Übergangsbereich von dem Werkzeugaustritt in den Eintrittsbereiches der Kalibrierhülse. Im Werkzeug sind kann beispielsweise für bestimmte Schmelzematerialien ein Kompressionsbereich vor den Austritt der Schmelze vorteilhaft für die spätere Rohrqualität haben. Auch notwendige Umlenkungen des Schmelzestromes sollten bei verweilzeitkritischen Materialien möglichst mit großen Radien realisiert und mit minimierter Kompressionsveränderung vorgenommen werden.

Weitere vorteilhafte Weiterbildungen sind in den Unteransprüchen wiedergegeben.

In den Zeichnungen wird schematisch die erfindungsgemäße Vorrichtung wiedergegeben:
- Fig. 1: zeigt eine typische Extrusionslinie
- Fig. 2: einen Längsschnitt durch den Rohrkopf,
- Fig. 3: einen Halbschnitt gemäß Fig. 2,
- Fig. 4: einen Halbschnitt durch die Hülse mit Diagramm,
- Fig. 5: eine Alternative zu Fig. 4,
- Fig. 6: eine weitere Alternative zu Fig. 4,
- Fig. 7: noch eine Alternativ zu Fig. 3,
- Fig. 8: eine Kombination von Dorn und Hülse in zwei unterschiedlichen Stellungen zueinander,
- Fig. 9: und
- Fig. 10: sind weitere alternative Ausführungen und
- Fig. 11: zeigt eine Ergänzung, die bei allen Ausführungen umsetzbar ist.

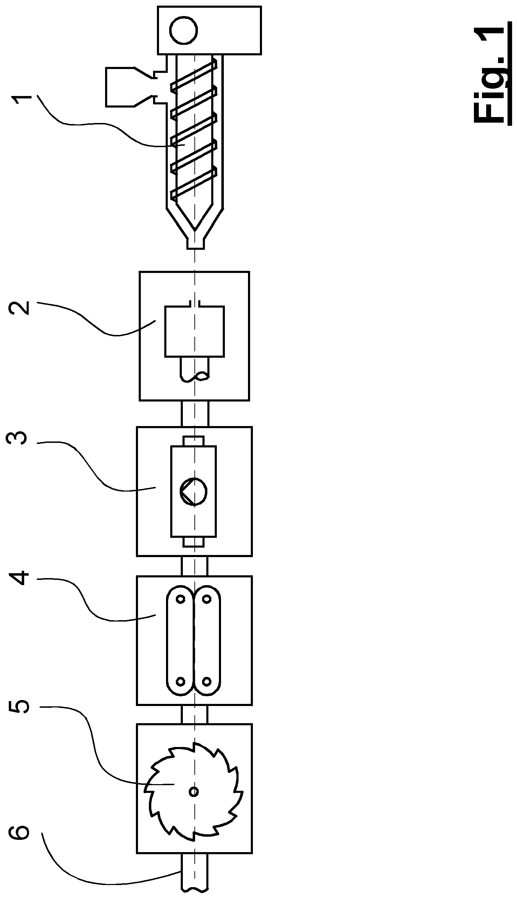

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

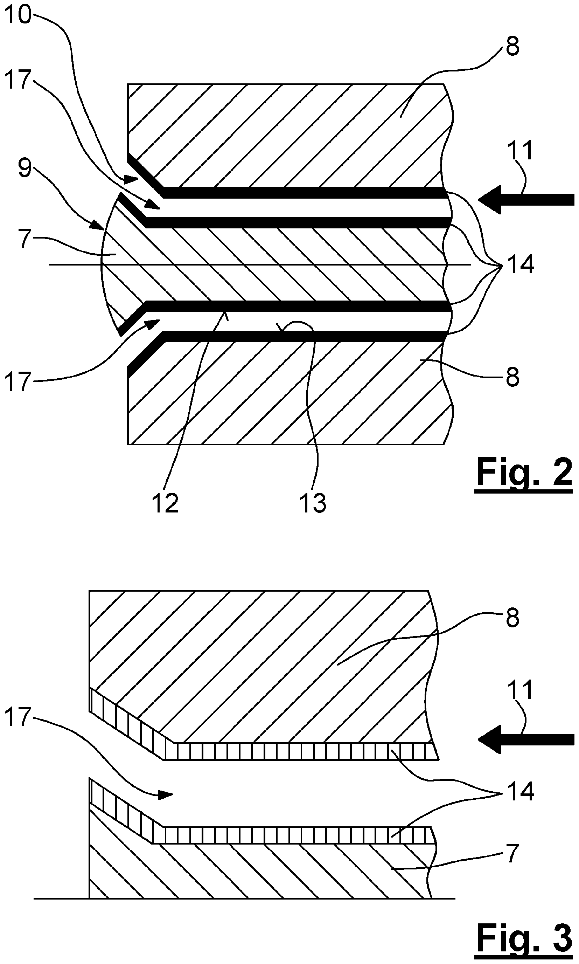

Figur 2 zeigt einen Teilbereich eines Längsschnittes entlang der Extrusionsmittelachse durch das Werkzeug 2, dem Rohrkopf. Dargestellt ist, wie in allen weiteren Figuren, immer nur schematisch der Endbereich der Hülse bzw. des Dorns, weitere Anbauteile sind nicht gezeigt. Gemäß der Darstellung ist ein Dorn 7 in der Hülse 8 zu sehen. Der Durchmesser des Dorns 7 am Dornende 9 vergrößert sich konisch und der Innendurchmesser der Hüls 8 am Hülsenende 10 vergrößert sich ebenfalls konisch. Je nach Ausprägung der Winkel im jeweiligen Konus kann der Schmelzekanal 17 am Ausgang des Rohrkopfes beeinflusst werden. Die Beeinflussung wird aber auch durch eine Verschiebung des Dorns 7 relativ zur Hülse 8 möglich, wobei es hier unerheblich ist, ob die Hülse 8 gegenüber dem Dorn 7 oder umgekehrt verschoben wird. Beide Varianten können vorgesehen werden. Sowohl die Außenseite 12 des Dorns 7, als auch die Innenseite 13 der Hülse 8 sind mit einer Beschichtung 14 versehen. Die Produktionsrichtung des Rohres 6 ist durch den Pfeil 11 angezeigt.

Figur 3 zeigt nur noch einen Halbschnitt der Figur 2 in einer Vergrößerten Darstellung, wodurch die Beschichtung 14 auf den Flächen der Hülse 8 und des Dorns 7 verdeutlicht wird. Gleiche Teile sind auch mit gleichen Bezugszeichen versehen.

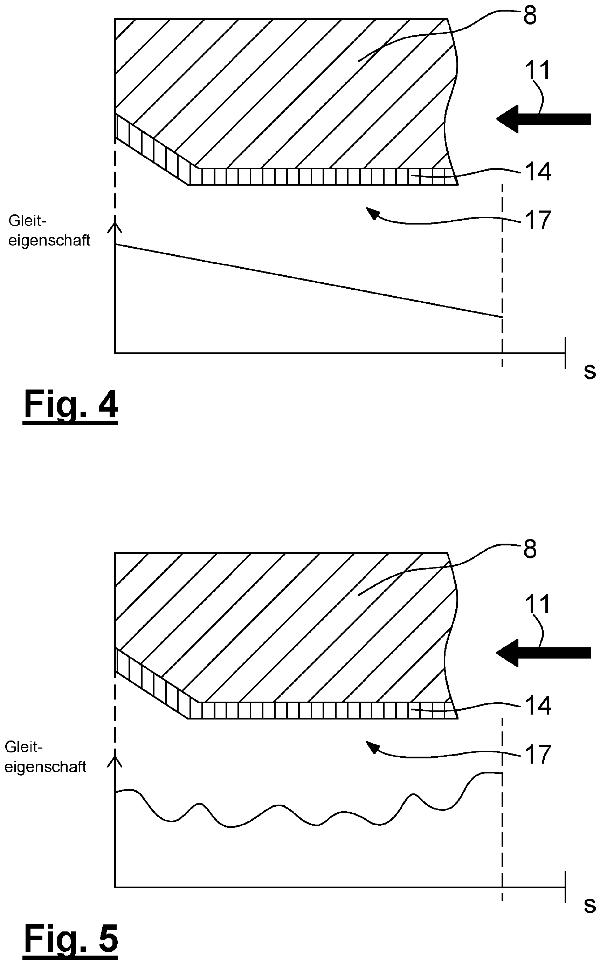

In Figur 4 ist nur noch die Hülse 8 im Halbschnitt dargestellt und darunter der prinzipielle Verlauf der Gleiteigenschaft über die Strecke der dargestellten Längsachse der Hülse gezeigt. Die Hülse 8 verfügt über eine Beschichtung 14 deren Gleiteigenschaft in Produktionsrichtung 11 besser wird. Diese Verbesserung wird durch in Produktionsrichtung stetig steigenden Graphen verdeutlicht.

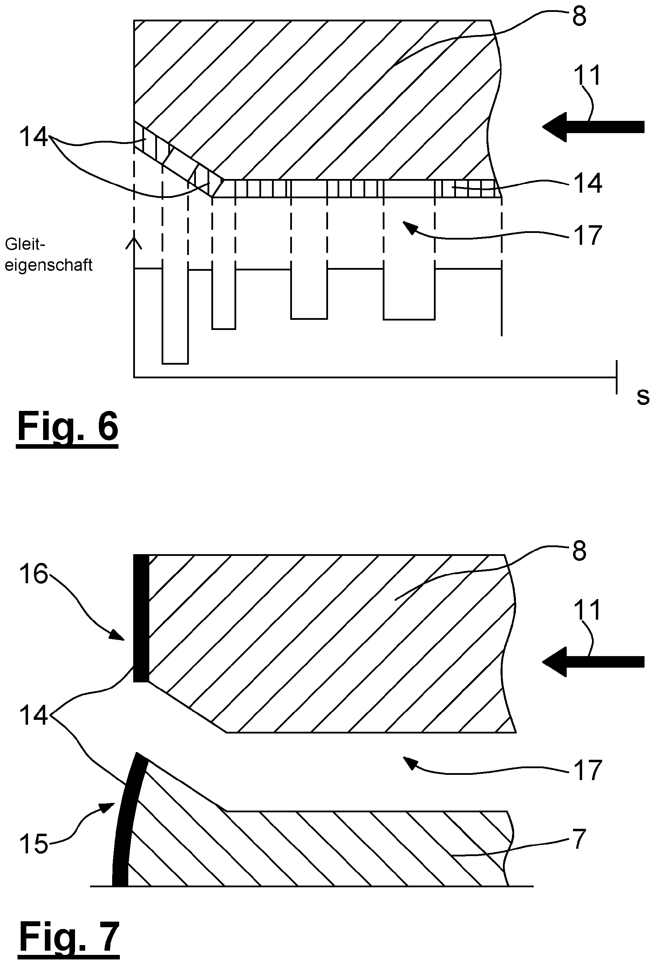

Figur 5 und 6 zeigt weitere Verläufe der Gleiteigenschaft gemäß der Figur 4, auch hier wurden wieder gleiche Teile mit gleichen Bezugsziffern versehen. Als Verlauf der Gleiteigenschaft wurden hier einmal ein sprunghafter (Figur 6) und einmal ein sinusförmiger (Figur 5) Verlauf dargestellt. Selbstverständlich kann die Gleiteigenschaft auch einen anderen Verlauf haben. Nicht dargestellt ist der Anfang des Rohrkopfes, über den gesamten Rohrkopf wäre der Verlauf der Gleiteigenschaft dann zum Beispiel im Mittel parabelförmig, also am Anfang besser in der Mitte schlechter und am Ende wieder besser. Dieser mittlere Verlauf kann dann natürlich wieder eine Sinusform oder jede anderen Form haben.

Wie in Figur 6 dargestellt, kann die Beschichtung 14 auch nur partiell sein, wodurch ein stufenförmiger Verlauf der Gleiteigenschaft entsteht.

Bei der Ausführung nach Figur 7 ist die Beschichtung 14 nur auf den Stirnseiten 15 und 16 der Hülse 8 und des Dorns 7 aufgebracht. Hier wird die Ablagerung von Ausscheidungen aus den Schmelzestrom beim Verlassen der Schmelze am Ende des Rohrkopfes erreicht. Es muss nicht zwingend in jeden Anwendungsfall notwendig sein, dass beide Stirnseiten zu Beschichten sind, es kann auch, je nach Anwendung genügen, dass nur die Stirnseite der Hülse 8 oder des Dorns 7 beschichtet wird. Es kann auch ein Material oder eine Beschichtung vorgesehen werden das analoge Haft und/oder Gleiteigenschaften aufweist.

Wie bereits ausgeführt, kann das Ziel der Veränderung der Gleiteigenschaft auch durch die geeignete Wahl des Werkstoffes oder durch unterschiedliche Werkstoffe sowie Polierqualität und oder Wärmebehandlung des Grundmaterials erreicht werden und die Beschichtung dadurch ersetzen. In den dargestellten Figuren ist immer nur eine Ausführungsform des Rohrkopfes mit Dorn 7 und Hülse 8 dargestellt worden, erfindungsgemäß kann dies aber auch auf alle weiteren Formgestaltungen des Dorns 7 und der Hülse 8 angewendet werden.

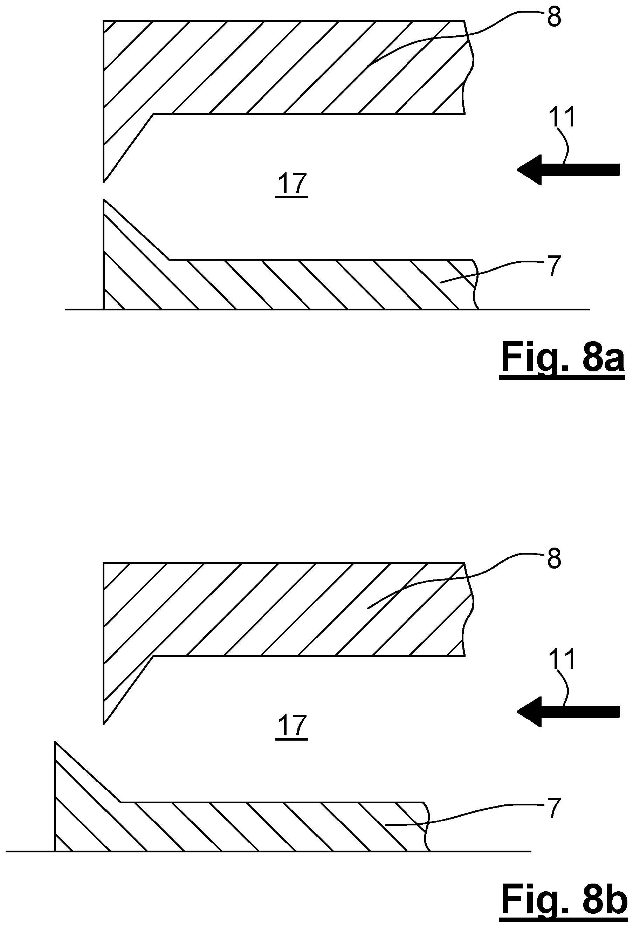

Nur beispielhaft ist in Figur 8 ein Fall dargestellt, bei dem der Innendurchmesser der Hülse 8 am Hülsenende 10 sich konisch verkleinert und sich der Durchmesser des Dorns 7 am Dornende 9 konisch vergrößert. In der oberen Darstellung ist der Schmelzekanal 17 am Ende des Rohrkopfes fast geschlossen und in der unteren Darstellung, bedingt durch die relative Verschiebung von Dorn 7 zur Hülse 8 entsprechend weit geöffnet. Die in den Figuren 2 bis 7 gezeigte Beschichtung gilt hier analog, ist hier jedoch nicht dargestellt.

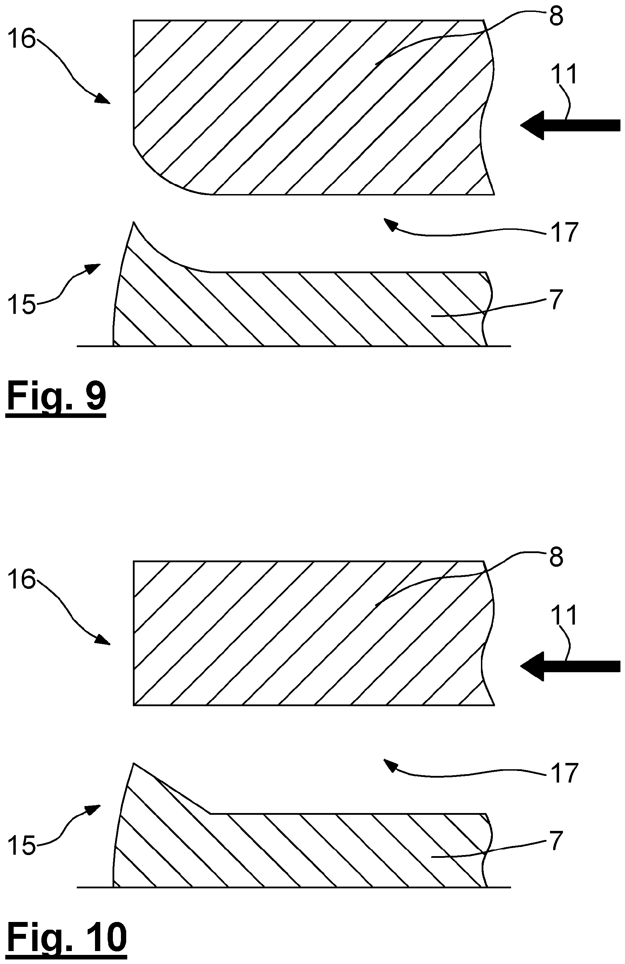

Figur 9 zeigt eine Ausführungsvariante bei der das Hülsenende 10 und das Dornende 9 mit einem Radius auslaufen. Es muss aber nicht zwingend ein Radius sein, genauso ist ein Kurve oder die Anordnung unterschiedlicher Radien nebeneinander denkbar. Es wird in jedem Fall über einen Bogenauslauf der Durchmesser des Dorns 7 und der Durchmesser der Hülse 8 zum Ende vergrößert.

Bei der Ausführungsvariante nach Figur 10 ist der Durchmesser der Hülse 8 unverändert und der Durchmesser des Dorns 7 vergrößert sich. Hier ist dies über ein konisches Dornende 9 realisier. Es kann aber genauso mit einem Dornende 9 gemäß Figur 9 (rund) umgesetzt werden.

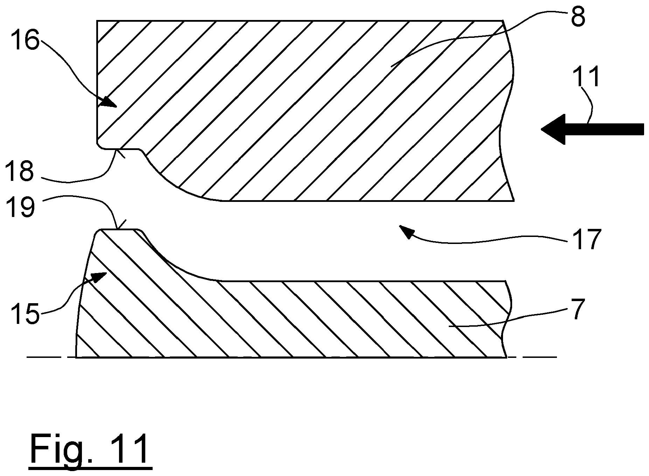

Bei der Figur 11 wurde die Ausführung gemäß der Figur 9 dahingehend verändert, dass nach der Durchmesseränderung über den Auslauf als Radius sich ein Teilstück anschließt, dass wieder gerade, also einen Verlauf parallel zur Mittelachse aufweist. Der Flächenabschnitt 18 der Hülse 8 und der Flächenabschnitt 19 des Dorns 7 sind demzufolge zylindrisch und bilden das Ende des Schmelzekanals 17.

Dieses zylindrische Ende kann natürlich bei allen ausführungsvarianten umgesetzt werden.

### Bezugszeichenliste:

- 1: Extruder
- 2: Extrusionswerkzeug
- 3: Kalibrier- und Kühlstation
- 4: Abzugsvorrichtung
- 5: Trennvorrichtung
- 6: Profil
- 7: Dorn
- 8: Hülse
- 9: Ende von 7
- 10: Ende von 8
- 11: Produktionsrichtung
- 12: Außenfläche von 7
- 13: Innenfläche von 8
- 14: Beschichtung
- 15: Stirnseite von 7
- 16: Stirnseite von 8
- 17: Schmelzekanal
- 18: Flächenabschnitt der Hülse 8
- 19: Flächenabschnitt des Dorns 7

## Patentansprüche

1. Vorrichtung zur Herstellung von Kunststoffrohren im Extrusionsverfahren mit einem Extruder (1),
einem sich in Produktionsrichtung an den Extruder anschließenden Rohrkopf (2) bestehend aus einem Grundwerkstoff mit mindestens einem Dorn (7) und einer Hülse (8),
wobei sich zwischen dem Dorn (7) und der Hülse (8) ein Schmelzekanal (17) bildet, der mindestens am Dornende (9) des Domes (7) und am Hülsenende (10) der Hülse (8) in Produktionsrichtung (11) gesehen strömungsgünstig ausgebildet ist,
wobei der Dorn (7) und die Hülse (8) relativ zueinander vor und zurück verstellbar sind,
wobei die Außenfläche des Domes (12) und/oder die Innenfläche der Hülse (13) mindestens partiell aus einem Werkstoff besteht/bestehen der eine höhere Gleitfähigkeit aufweist als der Grundwerkstoff,
**dadurch gekennzeichnet, dass**
die Außenfläche des Dorns (12) und/oder die Innenfläche der Hülse (13) mit einer Beschichtung (14) versehen ist deren Gleiteigenschaft in Produktionsrichtung (11) stetig verbessert, oder
die Außenfläche des Dorns (12) und/oder die Innenfläche der Hülse (13) mit einer Beschichtung (14) versehen ist deren Gleiteigenschaft in Produktionsrichtung (11) abwechselnd besser und wieder schlechter wird.

2. Vorrichtung nach Anspruch 1, **dadurch gekennzeichnet, dass** sich der Durchmesser des Domes (7) am Dornende und der Innendurchmesser der Hülse (8) am Hülsenende konisch vergrößert.

3. Vorrichtung nach Anspruch 1, **dadurch gekennzeichnet, dass** das Dornende (9) des Domes (7) und das Hülsenende (10) der Hülse (8) mit einer Rundung oder einem Radius versehen sind.

4. Vorrichtung nach Anspruch 1, **dadurch gekennzeichnet, dass** das Dornende (9) des Domes (7) mit einer Rundung oder einem Radius versehen ist und sich der Innendurchmesser der Hülse (8) am Hülsenende konisch verkleinert.

5. Vorrichtung nach Anspruch 1, **dadurch gekennzeichnet, dass** sich der Durchmesser des Domes (7) am Dornende konisch vergrößert und das Hülsenende (10) der Hülse (8) mit einer Rundung oder einem Radius versehen ist.

6. Vorrichtung nach Anspruch 1, **dadurch gekennzeichnet, dass** sich der Durchmesser des Domes (7) am Dornende (9) konisch vergrößert und das Hülsenende (10) der Hülse (8) stetig ausläuft.

7. Vorrichtung nach Anspruch 1, **dadurch gekennzeichnet, dass** sich der Durchmesser des Domes (7) am Dornende (9) konisch vergrößert und sich der Innendurchmesser der Hülse (8) am Hülsenende (10) konisch verkleinert.

8. Vorrichtung nach Anspruch 1, **dadurch gekennzeichnet, dass** das Dornende (9) des Domes (7) stetig ausläuft und sich der Innendurchmesser der Hülse (8) am Hülsenende (10) konisch verkleinert.

9. Vorrichtung nach Anspruch 1, **dadurch gekennzeichnet, dass** das Dornende (9) des Domes (7) mit einer Rundung oder einem Radius versehen ist und sich der Innendurchmesser der Hülse (8) am Hülsenende (10) konisch vergrößert.

10. Vorrichtung nach Anspruch 1, **dadurch gekennzeichnet, dass** das Dornende (9) des Domes (7) mit einer Rundung oder einem Radius versehen ist und das Hülsenende (10) der Hülse (8) stetig ausläuft.

11. Vorrichtung nach Anspruch 1, **dadurch gekennzeichnet, dass** sich der Durchmesser des Domes (7) am Dornende (9) und der Innendurchmesser der Hülse (8) am Hülsenende (10) konisch verkleinern.

12. Vorrichtung nach einem der Ansprüche 1 bis 11, **dadurch gekennzeichnet, dass** am Dorn- und Hülsenende zusätzlich zwei Flächenabschnitte (18, 19) erstrecken, die parallel und zylindrisch ausgeführt sind.

13. Vorrichtung nach einem der Ansprüche 1 bis 12, **dadurch gekennzeichnet, dass** die Beschichtung aus PTFE besteht.

14. Vorrichtung nach einem der Ansprüche 1 bis 13, **dadurch gekennzeichnet, dass** die höhere Gleiteigenschaft mittels eingelegter Ringe erfolgt, wobei diese aus anderem Material als das Grundmaterial bestehen oder Beschichtet sind.

15. Verfahren zur Herstellung von Kunststoffrohren im Extrusionsverfahren mit einer Vorrichtung nach Anspruch 1,
**dadurch gekennzeichnet, dass**
die Gleiteigenschaft im Schmelzekanal des Rohrkopfes in Abhängigkeit des zu verarbeitenden Materials angepasst wird.

## Claims

1. Apparatus for the production of plastic tubes by extrusion with an extruder (1),
a pipehead (2) being attached to the extruder in the production direction consisting of a base material with at least one mandrel (7) and a sleeve (8), a melt channel being created between the mandrel (7) and the sleeve (8), the melt channel being shaped to aid the flow in production direction (11) at least at the end (9) of the mandrel (7) and at the end (10) of the sleeve (8),
the mandrel (7) and the sleeve (8) being adjustable backwards and forward relatively to one another,
the outer surface of the mandrel (12) and/or the inner surface of the sleeve (13) consisting at least partially of a material that allows for a higher sliding quality than the base material,
**characterized in that**
the outer surface of the mandrel and/or the inner surface of the sleeve (13) is provided with a coating (14) whose sliding property improves consistently in production direction (11) or that
the outer surface of the mandrel and/or the inner surface of the sleeve (13) is provided with a coating (14) whose sliding property alternately improves and deteriorates in production direction (11).

2. Apparatus according to claim 1, **characterized in that** the diameter of the mandrel (7) at the end of the mandrel and the inner diameter of the sleeve (8) at the end of the sleeve (10) conically increase.

3. Apparatus according to claim 1, **characterized in that** the end (9) of the mandrel (7) and the end (10) of the sleeve (8) are rounded or implemented with a radius.

4. Apparatus according to claim 1, **characterized in that** the end (9) of the mandrel (7) is rounded or implemented with a radius and the inner diameter of the sleeve (8) conically decreases at the end of the sleeve (10).

5. Apparatus according to claim 1, **characterized in that** the diameter of the mandrel (7) conically increases at the end of the mandrel (9) and the end (10) of the sleeve (8) is rounded or implemented with a radius.

6. Apparatus according to claim 1, **characterized in that** the diameter of the mandrel (7) conically increases at the end of the mandrel (9) and the end (10) of the sleeve (8) is tapered.

7. Apparatus according to claim 1, **characterized in that** the diameter of the mandrel (7) conically increases at the end of the mandrel (9) and the inner diameter of the sleeve (8) conically decreases at the end of the sleeve (10).

8. Apparatus according to claim 1, **characterized in that** the end (9) of the mandrel (7) is tapered and the inner diameter of the sleeve (8) conically decreases at the end of the sleeve (10).

9. Apparatus according to claim 1, **characterized in that** the end (9) of the mandrel (7) is rounded or implemented with a radius and the inner diameter of the sleeve (8) conically increases at the end of the sleeve (10).

10. Apparatus according to claim 1, **characterized in that** the end (9) of the mandrel (7) is rounded or implemented with a radius and the end (10) of the sleeve (8) is tapered.

11. Apparatus according to claim 1, **characterized in that** the diameter of the mandrel (7) at the end of the mandrel (9) and the inner diameter of the sleeve (8) at the end of the sleeve (10) conically decrease.

12. Apparatus according to one of the claims 1-11, **characterized in that** two additional surface sections (18, 19) are attached to the end (9, 10) of the mandrel (7) and the sleeve (8), which are parallel and cylindrical.

13. Apparatus according to one of the claims 1-12, **characterized in that** the coating is composed of PTFE.

14. Apparatus according to one of the claims 1-13, **characterized in that** the higher sliding quality is realized by means of inserted rings that consist of or are coated with a material other than the base material.

15. Procedure for the production of plastic tubes by extrusion within an apparatus according to claim 1,
**characterized in that**
the sliding quality within the melt channel of the pipehead is adapted depending on the material to be processed.

## Revendications

1. Dispositif de production de tubes en plastique par extrusion au moyen d'une extrudeuse (1),
d'une tête tubulaire (2) qui consiste d'un matériau de base avec au moins un mandrin (7) et une douille (8) et qui est montée en aval de l'extrudeuse dans le sens de production,
un canal pour matériau fondu (17) se formant entre le mandrin (7) et la douille (8), le canal, vu dans le sens de production (11), étant réalisé de manière à optimiser l'écoulement au moins au bout (9) du mandrin (7) et au bout (10) de la douille (8),,
le mandrin (7) et la douille (8) étant ajustables l'un par rapport à l'autre,
la surface extérieure du mandrin (12) et/ou la surface intérieure de la douille (13) consistant au moins partiellement d'un matériau qui présente une capacité de glissement supérieure à celle du matériau de base,
**caractérisé en ce que**
la surface extérieure du mandrin (12) et/ou la surface intérieure de la douille (13) est recouvert d'un revêtement (14) dont la capacité de glissement s'améliore constamment dans le sens de production (11) ou
**que** la surface extérieure du mandrin (12) et/ou la surface intérieure de la douille (13) est recouvert d'un revêtement (14) dont la capacité de glissement s'améliore et se détériore alternativement dans le sens de production.

2. Dispositif selon la revendication 1, **caractérisé en ce que** le diamètre du mandrin (7) ainsi que le diamètre intérieur de la douille (8) augmentent de manière conique au bout du mandrin et de la douille.

3. Dispositif selon la revendication 1, **caractérisé en ce que** le bout (9) du mandrin (7) ainsi que le bout (10) de la douille (8) sont munis d'un arrondi ou d'un rayon.

4. Dispositif selon la revendication 1, **caractérisé en ce que** le bout (9) du mandrin (7) est muni d'un arrondi ou d'un rayon et que le diamètre interne de la douille (8) se rétrécit de manière conique au bout de la douille (10).

5. Dispositif selon la revendication 1, **caractérisé en ce que** le diamètre du mandrin (7) augmente de manière conique au bout du mandrin (7) et que le bout (10) de la douille (8) sont munis d'un arrondi ou d'un rayon.

6. Dispositif selon la revendication 1, **caractérisé en ce que** le diamètre du mandrin (7) augmente de manière conique au bout du mandrin (7) et que le bout (10) de la douille (8) est effilé.

7. Dispositif selon la revendication 1, **caractérisé en ce que** le diamètre du mandrin (7) augmente de manière conique au bout du mandrin (7) et que le diamètre interne de la douille (8) se rétrécit de manière conique au bout de la douille (10).

8. Dispositif selon la revendication 1, **caractérisé en ce que** le bout (9) du mandrin (7) est effilé et que le diamètre interne de la douille (8) se rétrécit de manière conique au bout de la douille (10).

9. Dispositif selon la revendication 1, **caractérisé en ce que** le bout (9) du mandrin (7) est muni d'un arrondi ou d'un rayon et que le diamètre intérieur de la douille (8) augmente de manière conique au bout de la douille.

10. Dispositif selon la revendication 1, **caractérisé en ce que** le bout (9) du mandrin (7) est muni d'un arrondi ou d'un rayon et que le bout (10) de la douille (8) est effilé.

11. Dispositif selon la revendication 1, **caractérisé en ce que** le diamètre du mandrin (7) ainsi que le diamètre intérieur de la douille (8) se rétrécissent de manière conique au bout du mandrin et de la douille.

12. Dispositif selon l'une quelconque des revendications 1 à 11, **caractérisé en ce qu'**en outre deux sections de surface (18, 19) à configuration parallèle et cylindrique s'étendent au bout du mandrin et de la douille.

13. Dispositif selon l'une quelconque des revendications 1 à 12, **caractérisé en ce que** le revêtement consiste en PTFE.

14. Dispositif selon l'une quelconque des revendications 1 à 13, **caractérisé en ce que** la capacité de glissement supérieure est réalise au moyen d'anneaux insérés, lesdits anneaux consistant en un matériau autre que le matériau de base ou étant revêtus.

15. Procédé de production de tubes en plastique avec un dispositif selon la revendication 1,
**caractérisé en ce que**
la que la propriété de glissement dans la canal pour matériau fondu de la tête tubulaire est adaptée en fonction du matériau à traiter.
